# EUROPEAN PATENT SPECIFICATION

(11) **EP 2 898 768 B1**
(45) Date of publication and mention of the grant of the patent: **01.03.2017**
(21) Application number: 15152512.8
(22) Date of filing: 26.01.2015
(51) Int. Cl.: A01K 1/02, A01K 5/02

(54) **Feeding system for feeding piglets**
Fütterungsanlage für Ferkel
Installation pour affourager des porcelets

(30) Priority: 27.01.2014 DK 201400012 U
(43) Date of publication of application: 29.07.2015
(73) Proprietor: Elmotech ApS, 8600 Silkeborg (DK)
(72) Inventor: Sondergard, Karsten, 8600 Silkeborg (DK)
(74) Representative: Zacco Denmark A/S

(56) References cited:
- EP-A2- 0 196 125
- EP-A2- 0 391 602
- EP-A2- 1 260 136
- DE-A1-102010 024 796

## Description

The present invention relates to a feeding system for automated feeding of piglets, wherein a given quantity of feed and water can be portioned out.

### BACKGROUND

Feeding piglets, *i.e.* in this context pigs, kept in farrowing pens together with a sow, is difficult for several reasons, as the pigs' digestive system is sensitive and is easily affected by infection, e.g. due to feed left behind sitting for too long in feeding troughs. Feeding is a supplement to lactation and contributes to the piglets growing satisfactorily and getting, for example, a supplement of iron, which the sow's milk is poor in.

In European patent application EP 0 196 125 A2 is disclosed an apparatus for mixing of water and a dry powdered feed for feeding to piglets. A dispensing mechanism dispenses measured increments of feed to a mixing chamber and a control valve is coupled to a water supply line for dispensing measured increments of water to the mixing chamber where a mixer is selectively operable for mixing the water with the feed to produce a mixture for the animals.

In European patent application EP 0 391 602 A2 is disclosed a piglet rearing arrangement, where the piglets are separated in a number of locations each being provided with a feeding apparatus.

In European patent application EP 1 260 136 A2 is disclosed individual feeding of dairy cows in a milking robot, where each animal is identified and the amount of feed as well as the amount of liquid added to the feed is measured out to the individual animal based on the identification.

### BRIEF DESCRIPTION OF THE PRESENT INVENTION

The object of the present invention is to improve the feeding of piglets in farrowing pens. This has been achieved by a feeding system for feeding piglets, the feeding system comprising a plurality of locations, typically farrowing pens, for feeding said piglets; a control system with a plurality of connection plugs arranged such that there is at least one connection plug in the vicinity of each location; a plurality of water supply outlets arranged such that there is at least one water supply outlet in the vicinity of each connection plug; a plurality of feeders, each of which being connectable to a connection plug, and each feeder comprising a container for accommodating a feed quantity; and a feed portioning device which can be operated such as to portion out feed from the container to a feeding place so that a group of said piglets may eat feed from the feeder, wherein each feeder is also connectable to a water supply outlet from which water can be portioned out to the feeding place; and water portioning devices which can be operated such as to portion out water from the water supply outlets to the respective feeding places, wherein the control system is adapted to be able to individually control the feed portioning device for each of the plurality of feeders as well as to be able to individually control the water portioning devices.

Each feeder comprises an activity sensor which detects the piglets' activity with respect to eating feed from the feeder, wherein the control system is adapted to control the feed portioning device of a feeder such as to portion out an increased quantity of feed, provided the activity sensor of the associated feeder has registered activity beyond a predetermined threshold value. Thereby, on days where the sow's milk production is less, the piglets will get more feed from the feeder and thereby get a more stable growth. The sow's milk production varies naturally from day to day, but if for an extended period, e.g. beyond three days, there is increased piglet activity, this could be a sign of illness or that the sow is otherwise not thriving. Therefore, in a particularly preferred embodiment of the invention, the control system is arranged to give off an alarm signal if the activity sensor of a feeder has registered activity beyond a predetermined threshold value for a longer time than a predetermined period of time.

The feeders can be coupled to or uncoupled from the connection plugs and the water supply outlets, *i.e.* the feeders can be arranged in the farrowing pens in which they are to be used and can be removed again when they are no longer needed, or when they need to be cleaned, maintained and disinfected to prevent growth of pathogenic organisms.

With such a feeding system according to the invention, the portioning out of dry feed as well as water for the piglets in each farrowing pen can be accurately controlled based on the number and age of the pigs, the quantity of dry feed to be portioned out per pig per day varying over time from 3 to 91 grams of dry feed. In this way it is ensured partly that the correct quantity of feed is present, partly that no remnants of dry feed mixed with water are left over from day to day, which can be a source of gastrointestinal infections among piglets. Mainly, the piglets eat dry feed when mixed with water, which means that it is not an attractive option to separate dry feed and water in order to increase the shelf-life. By controlling the portioning out of water which is mixed with the dry feed in the feeding trough, a suitable mixing ratio of the two constituents is achievable, precisely being suited for piglets.

The control system is preferably designed to be able to calculate the desired quantity of dry feed and water for the individual feeder for each day or each feeding based on input data indicating farrowing day and the number of piglets, the system being able to calculate the increase in feed quantity and water quantity for each day. Preferably, the users may enter operational inputs in the system in the form of notifications about dead or removed piglets in the individual farrowing pen, *i.e.* for the individual feeder, and the control system is preferably adapted to be able to include such entries in the calculation of feed quantities and water quantities.

In a simple but preferred embodiment, the control of the operation is done by the motor in the stationary part of the system, e.g. in control boxes arranged at the locations, *i.e.* the farrowing pens, such that the connection plug receives the necessary power to operate a motor in the individual feeder to portion out the given quantity of dry feed, for example in the form of a voltage being applied on the motor for a calculated number of seconds, corresponding to the quantity of dry feed. In an alternative embodiment, each feeder has a control box, optionally every other feeder has a control box, which then controls a pair of the feeders, wherein each control box receives power from the control system and has a data communication connection to a central control system, where it can send back operation-related data to the central control system and possibly receive control signals therefrom. As regards such an embodiment, it is advantageous for the feeding system to comprise a plurality of electrical power plugs arranged such that there is at least one supply plug in the vicinity of each connection plug, and wherein each feeder is connectable to a power supply plug. In a further preferred embodiment, in each power supply plug there is also built in a data connection plug such that the feeders are connected to both connection plug and power supply plug by one plug unit. Alternatively, the data connection from the individual control boxes to the central control system comprises a wireless connection.

The water portioning devices, which are controlled individually by the control system, are preferably adapted to be able to portion out water to the water supply outlets, *i.e.* the outlets to which the feeders are coupled, such that the water portioning devices, *i.e.* the valves controlling the portioning out of water, constitute a stationary part of the control system and are not part of the feeders. In this way, the feeders per se can be made as simple as possible and thereby be cheaper to replace as wear parts in the feeding system. Alternatively, the water portioning devices are arranged in the feeders per se.

Furthermore, it is preferred that the feeding system comprises a plurality of mounting brackets, each mounting bracket being suitable for supporting one feeder and being arranged such that there is at least one connection plug in the vicinity of each mounting bracket, the mounting brackets being suitable for the feeders to be mounted therein and removed therefrom manually.

In an alternative embodiment, the system does not comprise mounting brackets; instead the feeders are adapted to be mounted on partition walls in farrowing pens. In a particularly preferred embodiment, the feeders are adapted to be mounted in pairs on partition walls between farrowing pens, such that one feeder portions out feed to a feeding place in one farrowing pen, while the other feeder portions out feed to a feeding place in the other farrowing pen.

Furthermore, it is preferred that the feed portioning device for each feeder comprises an auger which can be turned by a motor in order to thereby portion out feed from the container to the feeding place.

The present invention also comprises a method of feeding piglets by use of a feeding system with a central control system as described herein for feeding piglets kept in a farrowing pen together with a sow.

### BRIEF DESCRIPTION OF THE DRAWINGS

The present invention is described in more detail with reference to the accompanying drawing, in which
Fig. 1 is a perspective representation of a cross section of a feeder according to an embodiment of the invention,
Fig. 2 is a representation of a cross section of the feeder shown in Fig. 1, viewed from the cutting surface, and
Fig. 3 is a schematic representation of the feeding system according to an embodiment of the invention.

### DETAILED DESCRIPTION OF AN EMBODIMENT OF THE INVENTION

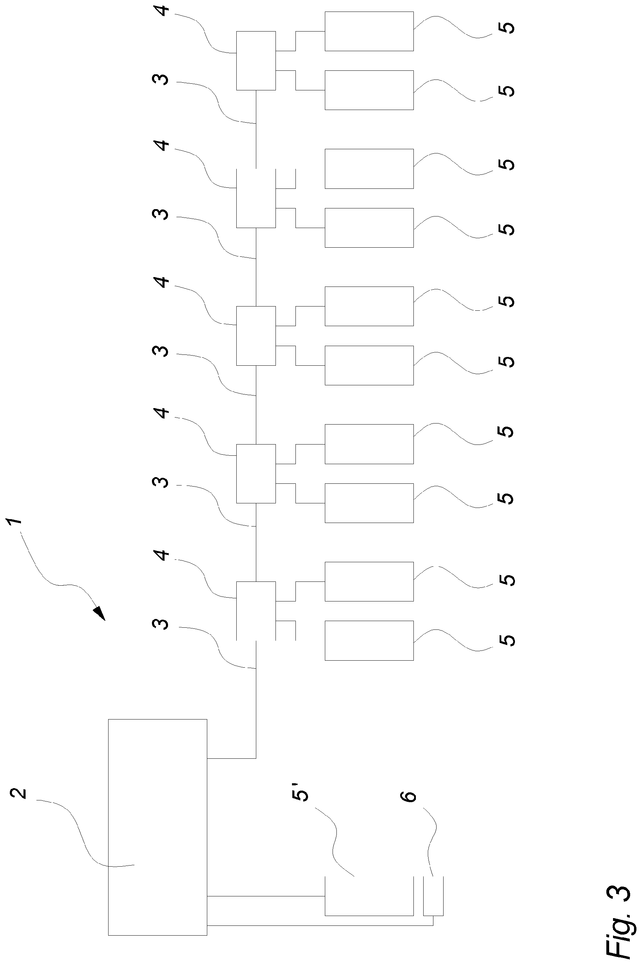

A feeding system 1 as shown schematically in Fig. 3, comprising a central control system 2 with a data communication connection 3 to a plurality of control boxes 4, each of which having two connection plugs for controlling feeders 5, such that the control system 2 can control the operation of each of the feeders 5 individually. In Fig. 3, only 10 feeders 5 are shown, but often the system 1 can accommodate many more, like, for example, 150 feeders 5. The feeding system 1 further comprises a control feeder 5' which is identical to the other feeders 5 in the system 1, wherein a weighing device 6 is arranged connected to the central control system 2 to give an output as to metered feed mass. By using the same type of feed in the control feeder 5' as in the other feeders 5, the central control system can use the control feeder 5' to calibrate the metering out for variations in feed type and feed quality.

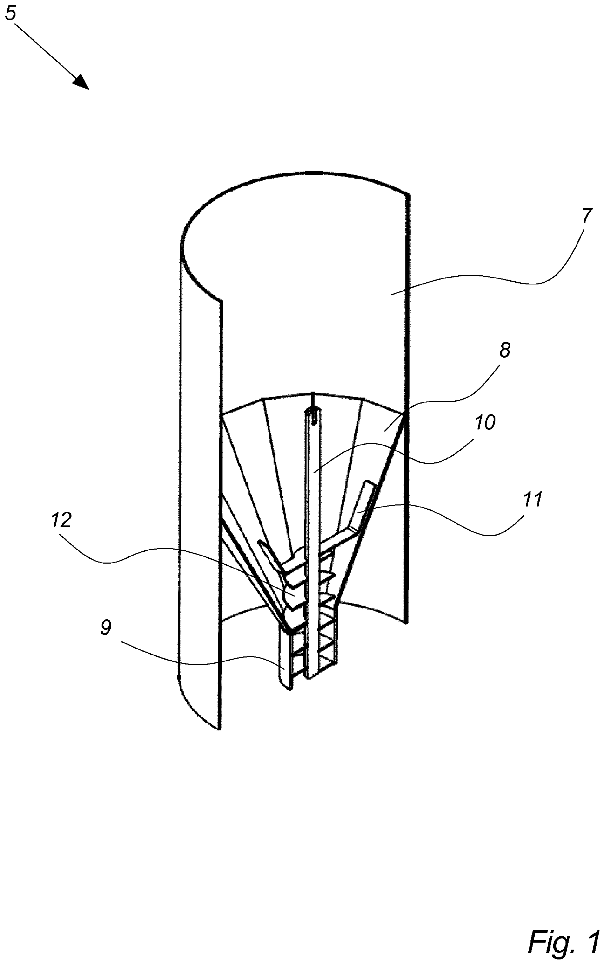

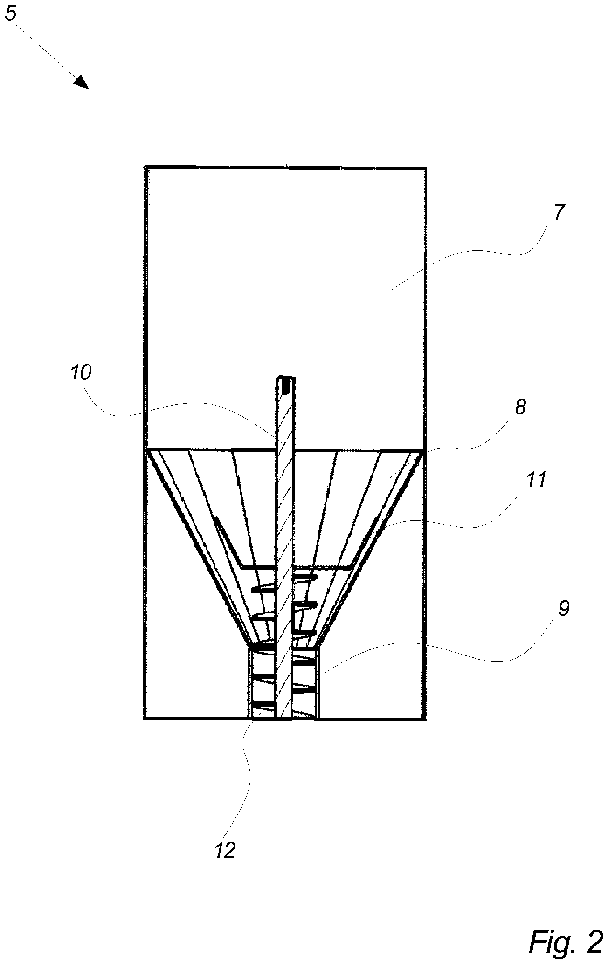

The feeder 5 is shown in sectional views in Figs. 1 and 2 and comprises a container part 7 capable of accommodating 5 litres of feed and ending in a hopper 8 with an outlet pipe 9. A shaft 10 extends through the hopper 8 and the outlet pipe 9, carrying an agitator 11 and an auger 12. The feeder 5 further comprises an electric motor (not shown) connected to the upper end of the shaft 10, the motor being powered by a connection plug (not shown) in the control box 4, and the operation of the motor being controlled by the central control system 2. The feeder 5 also comprises a water supply outlet (not shown) at the control box 4, connected to a water supply outlet (not shown) at the control box 4, and the water supply during operation is also controlled by the central control system 2. In the embodiment shown, the current in the connection plug is regulated in the control box 4 based on the data which the control box 4 receives from the central control system 2 via the data communication connection 3 so as to individually control the operation of the motor in the individual feeder 5 and thereby the portioning out of the feed. Furthermore, the water supply outlet is operated by the control box 4 based on data which the control box 4 receives from the central control system 2 via the data communication connection 3 so as to regulate the quantity of water metered out in each feeder 5. The data communication connection 3 may be a cable connection or a wireless connection.

In an alternative embodiment, the feeder 5 also comprises a data plug (not shown) for connection to a corresponding connection plug in the control box 4, or the feeder 5 comprises a wireless data communication unit to exchange data with the central control system. In such case, the feeder 5 has a constant power supply from a power supply plug in the control box 4, and the control of the motor operation is done in the feeder 5. Likewise, a controlled water valve may be arranged in the feeder 5, which is controlled via data received via the data plug, the water valve being connected to a permanent water supply in or at the control box 4.

In yet an alternative embodiment, the control box 4 may be arranged in the feeder 5 to control its operation, alternatively to control the operation of both the feeder 5 in question and its neighbour, such that a control box 4 is provided in every other feeder 5. The control box 4 arranged in the feeder 5 is preferably adapted to control the operation of the motor as well as the water valve in the feeder 5, respectively in the two feeders 5.

Each farrowing pen is provided with a bracket (not shown) for holding a feeder 5, the bracket also comprising a trough (not shown) for receiving feed portioned out by the feeder 5 by means of the feed portioning device 10, 11, 12. Alternatively, the feeders 5 are adapted to be hung in pairs over partition walls between farrowing pens so that each feeder 5 meters out feed for the piglets in one of the farrowing pens, and hence no mounting bracket is needed.

When, during operation of the shown feeding system 1, use is to be made of a feeder 5 in a farrowing pen, it is mounted in the bracket and connected to the connection plug in the associated control box 4 and to an associated water supply outlet. The connection to the connection plug of the control box 4 provides information to the central control system 2 that a feeder 5 has been mounted, and a user can now, for example via an application on a portable wireless data communication unit, communicate the number of piglets and their age with respect to the farrowing pen in question to the central control system 2, which can then calculate the appropriate portioning out of both dry feed and water. The control system 2 will now operate the motor of the feeder 5 and the associated water valve such that an appropriate feed quantity and water quantity will be portioned out to the trough in the farrowing pen. The quantity of feed and water is regulated automatically by the central computer day by day, as the piglets' needs increase with age, and is reduced correspondingly when the user reports the reduction in the number of piglets via said application. All data are stored in the central control system 2 for statistical purposes. Each feeder 5 is provided with an activity sensor detecting the piglets' feed searching activity, for example in the form of a displaceable clamp or a non-contact sensor, for example an infrared sensor, which detects the piglets' movements in the feeding place. In the event that the activity exceeds normal, in the form of a predetermined activity threshold value, the control system can trigger an increased feeding of the piglets. If this happens for an extended period, for example two or three days, the control system can give off an alarm in that it can indicate that the sow has too low milk production due to illness or other failure to thrive.

The control feeder 5' is activated each time dry feed is filled into the containers 7 of the feeders 5', typically one time at change of the type of feed, so that the portioning out can be adjusted on a running basis in response to changes as to the mass of dry feed being portioned out at operation of the motor and hence turning of the auger 12.

### LIST OF REFERENCE NUMERALS USED

- 1: Feeding system
- 2: Central control system
- 3: Data communication connection
- 4: Control box
- 5: Feeder
- 5': Control feeder
- 6: Weighing device
- 7: Container part
- 8: Hopper
- 9: Outlet pipe
- 10: Shaft
- 11: Agitator
- 12: Auger

## Claims

1. A feeding system (1) for feeding piglets, which feeding system comprises
a plurality of locations for feeding said piglets,
a control system (2, 3, 4) with a plurality of connection plugs arranged such that there is at least one connection plug in the vicinity of each of said locations,
a plurality of water supply outlets arranged such that there is at least one water supply outlet in the vicinity of each connection plug,
a plurality of feeders (5), each of which is connectable to a connection plug, each feeder containing a container (7) to accommodate a quantity of feed, and a feed portioning device (10, 11, 12) which can be operated to portion out feed from the container to a feeding place so that a group of said piglets may eat feed from the feeder, wherein each feeder is also connectable to a water supply outlet from which water can be portioned out to the feeding place, and
water portioning devices which can be operated to portion out water from the water supply outlets to the respective feeding places,
wherein the control system is adapted such as to be able to individually control the feed portioning device for each of the plurality of feeders as well as to be able to individually control the water portioning devices,
and wherein each feeder (5) comprises an activity sensor that detects the piglets' activity with respect to eating feed from the feeder (5), and wherein the control system is adapted to control the feed portioning device of a feeder such as to portion out an increased feed quantity if the activity sensor of the associated feeder has registered activity beyond a predetermined threshold.

2. A feeding system according to claim 1, wherein the water portioning devices are arranged to be able to portion out water to the water supply outlets.

3. A feeding system according to claim 1 or 2, furthermore comprising a plurality of mounting brackets, each mounting bracket being suited for supporting one feeder and being arranged such that there is at least one connection plug in the vicinity of each mounting bracket.

4. A feeding system according to any of the preceding claims, comprising a control box (4) in each feeder (5), or for each pair of feeders (5), and a data communication connection (3) connecting the control boxes (4) to a central control system (2).

5. A feeding system according to claim 4, wherein at least part of the data communication connection is constituted by a wireless connection.

6. A feeding system according to any of the preceding claims, wherein the connection plugs comprise a plurality of electric power supply plugs arranged such that there is at least one supply plug in the vicinity of each feeder.

7. A feeding system according to claim 6, wherein each connection plug comprises a data communication plug.

8. A feeding system according to any of the preceding claims, wherein the control system is adapted to give off an alarm signal if the activity sensor of a feeder has registered activity beyond a predetermined threshold value for a longer time than a predetermined period of time.

9. A feeding system according to any of the preceding claims, wherein the feed portioning device for each feeder (5) comprises an auger (12) which can be turned by a motor in order to thereby portion out feed from the container (7) to the feeding place.

10. Use of a feeding system according to any of the claims 1 to 9 for feeding piglets kept in a farrowing pen together with a sow.

## Patentansprüche

1. Fütterungssystem (1) zur Fütterung von Ferkeln, welches Fütterungssystem Folgendes umfasst
eine Mehrheit von Plätzen zur Fütterung von den Ferkeln,
ein Steuerungssystem (2, 3, 4) mit einer Mehrheit von Verbindungssteckern, die so angeordnet sind, dass es mindestens einen Verbindungsstecker in der Nähe von jedem der Plätze gibt,
eine Mehrheit von Wasserversorgungsauslässen, die so angeordnet sind, dass es mindestens einen Wasserversorgungsauslass in der Nähe von jedem Verbindungsstecker gibt,
eine Mehrzahl von Futterspendern (5), die jeweils mit einem Verbindungsstecker verbunden werden kann, wobei jeder Futterspender einen Behälter (7) zum Aufnehmen einer Menge von Futter sowie eine Futterverteilungseinrichtung (10, 11, 12) enthält, die betrieben werden kann, um Futter von dem Behälter zu einer Fütterungsstelle, so dass eine gruppe von den Ferkeln Futter von dem Futterspender fressen können, wobei jeder Futterspender ebenso mit einem Wasserversorgungsauslass verbunden werden kann, von dem Wasser zur Fütterungsstelle verteilt werden kann, und
Wasserverteilungseinrichtungen, die betrieben werden können, um Wasser von den Wasserversorgungsauslässen zu den jeweiligen Fütterungsstellen zu verteilen,
wobei das Steuerungssystem so eingerichtet ist, dass es einzeln die Futterverteilungseinrichtung für jeden der Mehrheit von Futterspendern sowie einzeln die Wasserverteilungseinrichtungen steuern kann,
und wobei jeder Futterspender (5) einen aktiven Sensor umfasst, der die Aktivität der Ferkel bezüglich des Fressens von Futter vom Futterspender (5) detektiert, und wobei das Steuerungssystem dafür eingerichtet ist, die Futterverteilungseinrichtung eines Futterspenders zu steuern, um eine erhöhte Futtermenge zu verteilen, wenn der Aktivitätssensor des zugehörigen Futterspenders eine Aktivität über einen vorgegeben Schwellenwert hinaus erfasst hat.

2. Fütterungssystem nach Anspruch 1, wobei die Wasserverteilungseinrichtungen dafür eingerichtet sind, um Wasser zu den Wasserversorgungsauslässen verteilen zu können.

3. Fütterungssystem nach Anspruch 1 oder 2, weiter umfassend eine Mehrheit von Befestigungsteilen, wobei jedes Befestigungsteil zur Unterstützung eines Futterspenders geeignet ist und so ausgeformt ist, dass es mindestens einen Verbindungsstecker in der Nähe von jedem Befestigungsteil gibt.

4. Fütterungssystem nach einem der vorgehenden Ansprüche, umfassend einen Steuerkasten (4) in jedem Futterspender (5), oder für jedes Paar von Futterspendern (5), und eine Datenkommunikationsverbindung (3), die die Steuerkasten (4) mit einem zentralen Steuerungssystem (2) verbindet.

5. Fütterungssystem nach Anspruch 4, wobei mindestens ein Teil der Datenkommunikationsverbindung aus einer drahtlosen Verbindung besteht.

6. Fütterungssystem nach einem der vorgehenden Ansprüche, wobei die Verbindungsstecker eine Mehrheit von elektrischen Stromversorgungssteckern umfassen, die so angeordnet sind, dass es mindestens einen Versorgungsstecker in der Nähe von jedem Futterspender gibt.

7. Fütterungssystem nach Anspruch 6, wobei jeder Verbindungsstecker einen Datenkommunikationsstecker umfasst.

8. Fütterungssystem nach einem der vorgehenden Ansprüche, wobei das Steuerungssystem dafür eingerichtet ist, ein Alarmsignal abzugeben, wenn der Aktivitätssensor eines Futterspenders Aktivität über einen vorgegeben Schwellenwert hinaus für einen längeren Zeitraum als ein vorgegebener Zeitraum erfasst hat.

9. Fütterungssystem nach einem der vorgehenden Ansprüche, wobei die Futterverteilungseinrichtung für jeden Futterspender (5) eine Förderschnecke (12) umfasst, die durch einen Motor gedreht werden kann, um damit Futter von dem Behälter (7) zu der Fütterungsstelle zu verteilen.

10. Anwendung eines Fütterungssystems nach einem der Ansprüche 1 bis 9 zur Fütterung von Ferkeln, die in einem Ferkelstall zusammen mit einer Sau gehalten werden.

## Revendications

1. Système d'affouragement (1) pour affourager des porcelets, ledit système d'affouragement comprenant
une pluralité d'emplacements pour affourager lesdits porcelets,
un système de commande (2, 3, 4) avec une pluralité de fiches de connexion arrangées si bien qu'au moins une fiche de connexion est située au voisinage de chacun desdits emplacements,
une pluralité de sorties d'alimentation en eau disposées d'une telle manière qu'il y a au moins une sortie d'alimentation en eau au voisinage de chaque fiche de connexion,
une pluralité de dispositifs d'alimentation (5), dont chacun peut être connecté à une fiche de connexion, chaque dispositif d'alimentation comportant un récipient (7) pour recevoir une quantité d'aliment, et un dispositif de dosage d'aliment (10, 11, 12) pouvant être actionnée pour doser l'aliment à partir du récipient à un endroit d'affouragement si bien qu'un groupe desdits porcelets peut consommer des aliments à partir du dispositif d'alimentation, chaque dispositif d'alimentation pouvant également être connecté à une sortie d'alimentation en eau à partir de laquelle l'eau peut être dosé sur l'endroit d'affouragement, et
des dispositifs de dosage en eau qui peuvent être actionnés de manière à doser l'eau à partir des sorties d'alimentation en eau aux endroits d'affouragement respectifs,
dans lequel le système de commande est adapté de manière à être apte à commander individuellement le dispositif de dosage d'aliment pour chacun de la pluralité de dispositif d'alimentation ainsi qu'être apte à commander individuellement les dispositifs de dosage en eau,
et dans lequel chaque dispositif d'alimentation (5) comprend un capteur d'activité qui détecte l'activité des porcelets par rapport à la consommation de l'aliment du dispositif d'alimentation (5), et dans lequel le système de commande est adapté pour commander le dispositif de dosage d'aliment d'un dispositif d'alimentation de manière à doser une quantité accrue d'aliments si le capteur d'activité du dispositif d'alimentation associé a enregistré une activité au-delà d'un seuil prédéterminé.

2. Système d'affouragement selon la revendication 1, dans lequel les dispositifs de dosage en eau sont arrangés de manière à être aptes à doser l'eau aux sorties d'alimentation en eau.

3. Système d'affouragement selon la revendication 1 ou 2, comprenant en outre une pluralité de supports de montage, chaque support de montage étant adapté pour supporter un dispositif d'alimentation et étant agencé si bien qu'il y a au moins une fiche de connexion au voisinage de chaque support de montage.

4. Système d'affouragement selon l'une quelconque des revendications précédentes, comprenant un boîtier de commande (4) dans chaque dispositif d'alimentation (5) ou pour chaque paire de dispositifs d'alimentation (5), et une connexion de communication de données (3) reliant les boîtiers de commande (4) à un système de commande central (2).

5. Système d'affouragement selon la revendication 4, dans lequel au moins une partie de la connexion de communication de données est constituée par une liaison sans fil.

6. Système d'affouragement selon l'une quelconque des revendications précédentes, dans lequel les fiches de connexion comprennent une pluralité de fiches d'alimentation de puissance électrique disposées si bien qu'il y a au moins une fiche d'alimentation au voisinage de chaque dispositif d'alimentation.

7. Système d'affouragement selon la revendication 6, dans lequel chaque fiche de connexion comprend une fiche de communication de données.

8. Système d'affouragement selon l'une quelconque des revendications précédentes, dans lequel le système de commande est adapté pour émettre un signal d'alarme si le capteur d'activité d'un dispositif d'alimentation a enregistré une activité au-delà d'une valeur de seuil prédéterminée pendant une durée plus longue qu'une période de temps prédéterminée.

9. Système d'affouragement selon l'une quelconque des revendications précédentes, dans lequel le dispositif de dosage d'aliment pour chaque dispositif d'alimentation (5) comprend une vis sans fin (12) qui peut être tournée par un moteur afin de doser l'aliment à partir du récipient (7) à l'endroit d'affouragement.

10. Utilisation d'un système d'affouragement selon l'une quelconque des revendications 1 à 9 pour affourager des porcelets maintenus dans une étable à porcs ainsi qu'une truie.
